# EUROPEAN PATENT APPLICATION

(11) **EP 4 080 469 A2**
(43) Date of publication of application: **26.10.2022**
(21) Application number: 22190275.2
(22) Date of filing: 12.08.2022
(51) Int. Cl.: G06V 30/14, G06V 30/28

(54) **METHOD AND APPARATUS OF RECOGNIZING TEXT, DEVICE, STORAGE MEDIUM AND SMART DICTIONARY PEN**

(30) Priority: 13.08.2021 CN 202110934110
(71) Applicant: BEIJING BAIDU NETCOM SCIENCE TECHNOLOGY CO., LTD., Beijing 100085 (CN)
(72) Inventor: LIU, Shanshan, Beijing, 100085 (CN); QIAO, Meina, Beijing, 100085 (CN); WU, Liang, Beijing, 100085 (CN); ZHANG, Chengquan, Beijing, 100085 (CN); YAO, Kun, Beijing, 100085 (CN)
(74) Representative: Carpmaels & Ransford LLP

(57) **Abstract**

A method of recognizing a text is provided, which relates to a field of an artificial intelligence technology, in particular to a field of computer vision and deep learning technology, and may be applied to Optical Character Recognition OCR or other scenes. A specific implementation solution includes: acquiring a plurality of image sequences by continuously scanning a document; performing an image stitching based on the plurality of image sequences, so as to obtain a plurality of successive frames of stitched images corresponding to the plurality of image sequences respectively, wherein an overlapping region exists between each two successive frames of stitched images; performing a text recognition based on the plurality of successive frames of stitched images, so as to obtain a plurality of corresponding recognition results; and performing a de-duplication on the plurality of recognition results based on the overlapping region between each two successive frames of stitched images in the plurality of successive frames of stitched images, so as to obtain a text recognition result for the document.

## Description

### TECHNICAL FIELD

The present disclosure relates to a field of an artificial intelligence technology, in particular to a field of computer vision and deep learning technology, and may be applied to Optical Character Recognition (OCR) and other scenes. Specifically, the present disclosure relates to a method and an apparatus of recognizing a text, a device, a storage medium, a smart dictionary pen, and a computer program product.

### BACKGROUND

In recent years, smart hardware products with OCR function, such as smart dictionary pens and smart tablets, have emerged in an education market. Smart dictionary pens have attracted attentions and layouts of major companies. For example, a plurality of companies have their own brand of smart dictionary pens.

A smart hardware product with OCR function generally needs to have a text wake-up function and a text recognition function. Moreover, such smart hardware product generally has a basic function of processing a text fragment captured by a high-speed camera and displaying corresponding original text, translated text, and related search content and recommended content. These basic functions require the smart hardware product to accurately recognize a large number of text fragments in a scene of successive video frames.

### SUMMARY

The present disclosure provides a method and an apparatus of recognizing a text, a device, a storage medium, a smart dictionary pen, and a computer program product.

According to an aspect of the present disclosure, a method of recognizing a text is provided, including: acquiring a plurality of image sequences by continuously scanning a document; performing an image stitching based on the plurality of image sequences, so as to obtain a plurality of successive frames of stitched images corresponding to the plurality of image sequences respectively, wherein an overlapping region exists between each two successive frames of stitched images; performing a text recognition based on the plurality of successive frames of stitched images, so as to obtain a plurality of corresponding recognition results; and performing a de-duplication on the plurality of recognition results based on the overlapping region between each two successive frames of stitched images in the plurality of successive frames of stitched images, so as to obtain a text recognition result for the document.

According to another aspect of the present disclosure, an apparatus of recognizing a text is provided, including: an image acquisition module configured to acquire a plurality of image sequences by continuously scanning a document; an image stitching module configured to perform an image stitching based on the plurality of image sequences, so as to obtain a plurality of successive frames of stitched images corresponding to the plurality of image sequences respectively, wherein an overlapping region exists between each two successive frames of stitched images; an initial recognition module configured to perform a text recognition based on the plurality of successive frames of stitched images, so as to obtain a plurality of corresponding recognition results; and a de-duplication recognition module configured to perform a de-duplication on the plurality of recognition results based on the overlapping region between each two successive frames of stitched images in the plurality of successive frames of stitched images, so as to obtain a text recognition result for the document.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method described in embodiments of the present disclosure.

According to another aspect of the present disclosure, a non-transitory computer-readable storage medium having computer instructions therein is provided, and the computer instructions are configured to cause a computer to implement the method described in embodiments of the present disclosure.

According to another aspect of the present disclosure, a computer program product containing a computer program is provided, and the computer program, when executed by a processor, causes the processor to implement the method described in embodiments of the present disclosure.

According to another aspect of the present disclosure, a smart dictionary pen is provided, including the apparatus described in embodiments of the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1A schematically shows a system architecture suitable for embodiments of the present disclosure;
FIG. 1B schematically shows a scene diagram in which embodiments of the present disclosure may be implemented;
FIG. 2 schematically shows a flowchart of a method of recognizing a text according to embodiments of the present disclosure;
FIG. 3 schematically shows a schematic diagram of a text recognition for a scene of successive video frames according to embodiments of the present disclosure;
FIG. 4 schematically shows an effect diagram of a text recognition for a scene of successive video frames according to embodiments of the present disclosure;
FIG. 5 schematically shows a block diagram of an apparatus of recognizing a text according to embodiments of the present disclosure; and
FIG. 6 schematically shows a block diagram of an electronic device for implementing the method and apparatus of recognizing the text according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

It should be understood that conventional text recognition solutions include following solution 1 and solution 2. Solution 1 includes a text detection stage and a text recognition stage. In the text detection stage, east, db and other algorithms are mainly used for a text detection. In the text recognition stage, CRNN, ATTENTION, SRN and other algorithms are mainly used for a text recognition on a detection result obtained in the text detection stage. Solution 2 is an end-to-end text recognition solution, in which text net, PGNET and other algorithms are mainly used for the text recognition.

The above-mentioned two solutions may be implemented to perform an accurate text region detection and text content recognition for a single frame of image, but may not perform a de-duplication on a large number of text fragments in a scene of successive video frames.

It should also be understood that in the scene of successive video frames, a large number of successive video frames may be firstly stitched into a complete stitched image using a panoramic image mosaic method, and then the stitched image may be output to a downstream OCR module for a text recognition. However, the method of stitching all text fragments and then performing the text recognition may not meet a real-time requirement, and may result in a large memory consumption and affect a performance of a device.

In addition, considering a principle that the smaller a size of an input image in an OCR model is, the faster the text recognition is, it is also possible to acquire image sequences one by one in a process of continuously scanning a document, stitch the image sequences into successive frames of stitched images, then perform a text recognition on each frame of stitched image respectively, and return a corresponding text recognition result. This solution may reduce an overall time consumption and bring a real-time benefit. However, such image stitching solution may fail to recognize some text content due to an incomplete or broken text at an edge of the stitched images. Although a semantic error correction function of the OCR model may be performed to correctly recognize part of the text content, a WYSIWYG (what you see is what you get) recognition is generally performed, which results in a poor effect of the text recognition.

In this regard, embodiments of the present disclosure provide a text recognition solution that may be used in a scene of successive video frames. This solution also includes acquiring image sequences one by one in a process of continuously scanning a document, stitching the image sequences into successive frames of stitched images, then performing a text recognition on each frame of stitched image respectively, and returning a corresponding text recognition result. However, different from the above-mentioned solution, in the solution of the present disclosure, an overlapping region exists between each two successive frames of stitched images, and before returning the corresponding text recognition result, a de-duplication may be performed on a text recognition result obtained from adjacent frames of stitched images, according to the overlapping region between each two successive frames of stitched images. Based on this, the solution of the present disclosure may not only obtain the real-time benefit, but also may remedy the incomplete or broken text at the edge of each stitched image because the overlapping region exists between former and latter stitched image frames. That is, the incomplete or broken text at the edge of the stitched image may be recognized through the text content in the overlapping region, so that the text recognition effect may be improved.

The present disclosure will be described in detail below with reference to the accompanying drawings and specific embodiments.

A system architecture suitable for a method and an apparatus of recognizing a text of embodiments of the present disclosure is introduced as follows.

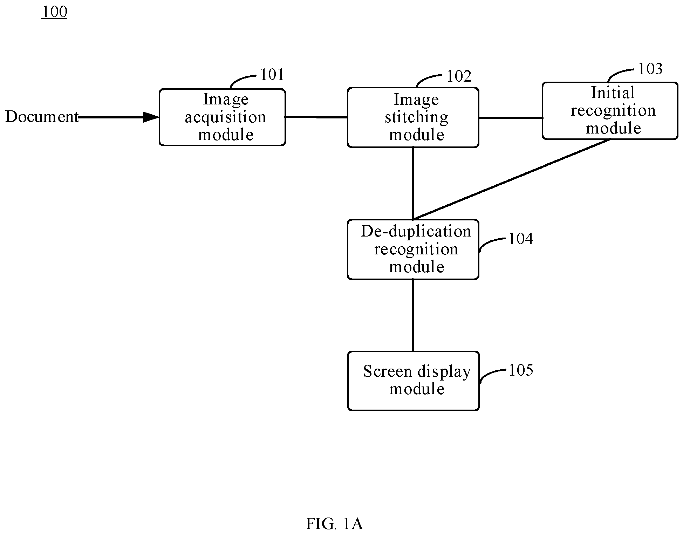

FIG. 1A schematically shows a system architecture suitable for embodiments of the present disclosure. It should be noted that FIG. 1A is only an example of a system architecture to which embodiments of the present disclosure may be applied, so as to help those skilled in the art to understand the technical content of the present disclosure, but it does not mean that embodiments of the present disclosure may not be applied to other environments or scenes.

As shown in FIG. 1A, a system architecture 100 may include an image acquisition module 101, an image stitching module 102, an initial recognition module 103, a de-duplication recognition module 104, and a screen display module 105.

It should be understood that the image acquisition module 101 may be a high-speed camera. For example, the high-speed camera may continuously scan text information in a document to obtain a large number of successive video frames.

In embodiments of the present disclosure, after a large number of successive video frames acquired by the image acquisition module 101 are input to the image stitching module 102, the image stitching module 102 may intercept image sequences in the successive video frames at a predetermined frame rate (such as 40FPS, 120FPS, etc.), and stitch each image sequence into a corresponding frame of stitched image, with an overlapping region between each two successive frames of stitched images. That is, an overlapping region exists between each two adjacent frames of stitched images.

In embodiments of the present disclosure, the initial recognition module 103 (the OCR module) may perform a text recognition separately on each image frame in the successive frames of stitched images output by the image stitching module 102, and obtain a corresponding string based on each frame of stitched image.

The de-duplication recognition module 104 may perform a de-duplication and a concatenation on two corresponding strings output by the initial recognition module 103 based on the overlapping region between each two successive frames of stitched images in the successive frames of stitched images output by the image stitching module 102, and finally obtain and return a correct string recognition result to the screen display module 105.

It should be understood that in embodiments of the present disclosure, the above-mentioned system architecture 100 may be installed in a smart hardware product such as a smart dictionary pen and a smart tablet, so as to achieve a text recognition function for a scene of a large number of successive video frames. That is, the above-mentioned system architecture 100 may be implemented by a smart hardware product through on-end computing power.

An application scene suitable for the method and apparatus of recognizing the text of embodiments of the present disclosure is introduced as follows.

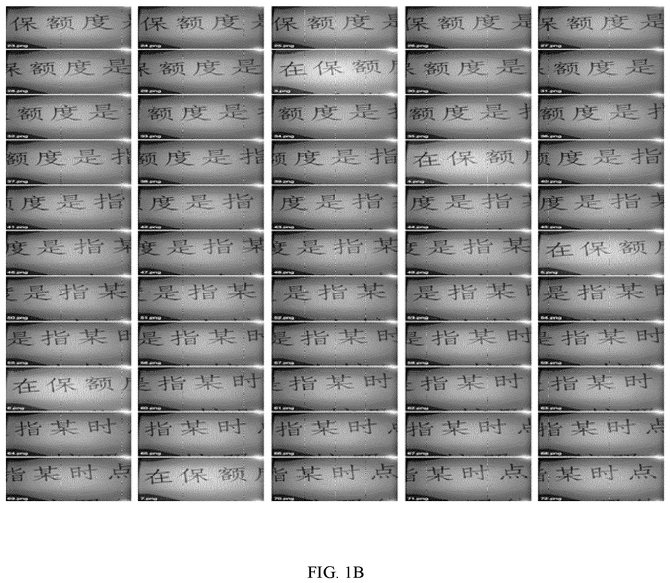

As shown in FIG. 1B, for the successive video frames shown (these video frames have characteristics of continuity, a large quantity, and uncertainty of contained text fragments due to several incomplete or broken words), an efficient dynamic text recognition and de-duplication solution provided by embodiments of the present disclosure may be applied to perform the text recognition. In this solution, document scanning, image stitching and text recognition are performed in parallel, so that the time consumption may be reduced, and user's real-time requirement for the text recognition may be satisfied. Moreover, in this solution, a text recognition result obtained for each stitched image is returned in real time, so that a memory consumption may be reduced, and a performance of the smart hardware product may be improved.

According to embodiments of the present disclosure, the present disclosure provides a method of recognizing a text.

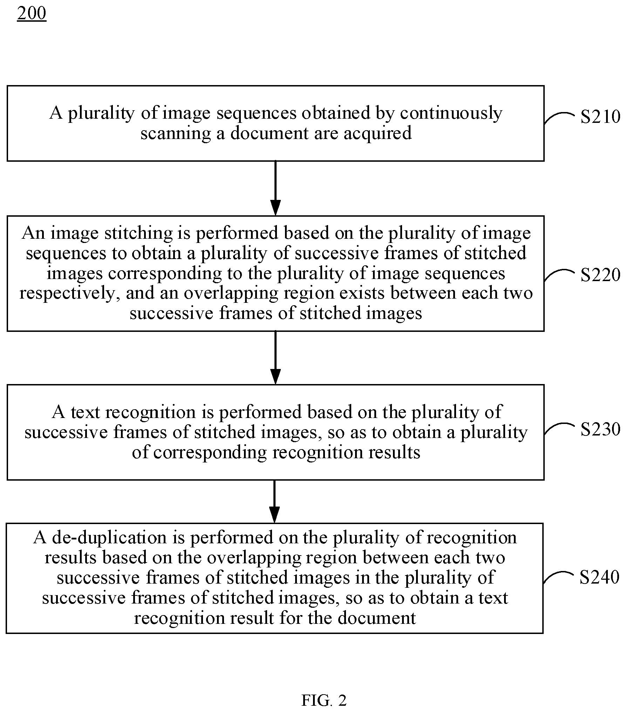

FIG. 2 schematically shows a flowchart of a method of recognizing a text according to embodiments of the present disclosure.

As shown in FIG. 2, a method 200 of recognizing a text may include operations S210 to S240.

In operation S210, a plurality of image sequences obtained by continuously scanning a document are acquired.

In operation S220, an image stitching is performed based on the plurality of image sequences to obtain a plurality of successive frames of stitched images corresponding to the plurality of image sequences respectively, and an overlapping region exists between each two successive frames of stitched images.

In operation S230, a text recognition is performed based on the plurality of successive frames of stitched images, so as to obtain a plurality of corresponding recognition results.

In operation S240, a de-duplication is performed on the plurality of recognition results based on the overlapping region between each two successive frames of stitched images in the plurality of successive frames of stitched images, so as to obtain a text recognition result for the document.

In operation S210, in a process of continuously scanning the document, image sequences may be intercepted from the input successive image frames at a predetermined frame rate (such as 40FPS, 120FPS, etc.).

In an embodiment of the present disclosure, a predetermined number of repeated image frames may exist between each two adjacent image sequences, that is, former and latter image sequences obtained in operation S210, so that an overlapping region may exist between each two successive frames of stitched images when operation S220 is executed to perform the image stitching on the plurality of image sequences obtained in operation S210. It should be understood that, in operation S220, a corresponding frame of stitched image may be obtained by separately performing the image stitching on each image sequence, and corresponding successive frames of stitched images may be obtained by respectively performing the image stitching on the plurality of successive image sequences.

In operation S230, the text recognition is separately performed on each of the plurality of successive frames of stitched images in sequence, and a plurality of corresponding successive recognition results may be obtained.

In embodiments of the present disclosure, because the overlapping region exists between each two successive frames of stitched images (that is, former and latter frames of stitched images), the de-duplication and the concatenation may be performed in operation S240 on the plurality of recognition results obtained in operation S230, based on the overlapping region between each two adjacent frames of stitched images in the successive frames of stitched images, so as to finally obtain an accurate text recognition result for a target document.

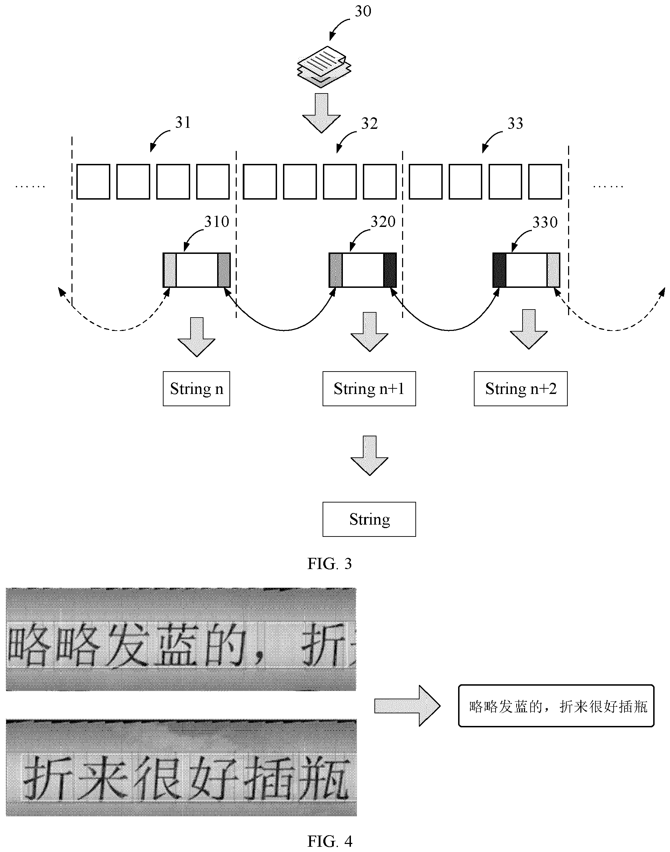

Exemplarily, as shown in FIG. 3, in a process of continuously scanning a document 30, successive video frames containing a large number of text fragments may be obtained, and image sequences ..., 31, 32, 33, ... may be sequentially intercepted from the successive video frames at a certain frame rate. An image stitching may be performed on the image sequence 31 to obtain a stitched image 310, an image stitching may be performed on the image sequence 32 to obtain a stitched image 320, an image stitching may be performed on the image sequence 33 to obtain a stitched image 330, and so on. The stitched image 310, the stitched image 320, the stitched image 330... may sequentially form successive frames of stitched images. A string n may be obtained by performing an OCR on the stitched image 310, a string n+1 may be obtained by performing an OCR on the stitched image 320, and a string n+2 may be obtained by performing an OCR on the stitched image 330. Because an overlapping region exists between a tail of the stitched image 310 and a head of the stitched image 320 and an overlapping region also exists between a tail of the stitched image 320 and a head of the stitched image 330, a de-duplication needs to be performed on the string n and the string n+1 based on the overlapping region between the tail of the stitched image 310 and the head of the stitched image 320. Similarly, a de-duplication needs to be performed on the string n+1 and the string n+2 based on the overlapping region between the tail of the stitched image 320 and the head of the stitched image 330. Finally, the strings after the de-duplication may be concatenated in sequence to obtain an accurate string.

Exemplarily, as shown in FIG. 4, through the text recognition solution provided by embodiments of the present disclosure, a text " 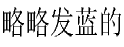 , 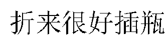 " (slightly blue, folds well for vase) may be output according to upper and lower successive frames of stitched images on a left side of FIG. 4..

It should be noted that an embodiment of the present disclosure may be implemented to control that a head part of each frame of stitched image contains a tail part of a previous frame of stitched image (e.g., containing a tail part with a width of 20 to 30 cm).

In addition, in an embodiment of the present disclosure, a resolution width of each frame of stitched image may be further controlled to be within 500 pixels. In this case, the OCR module may recognize a stitched image with a resolution width within 500 pixels each time, so that a text recognition rate may be improved, and the real-time benefit may be further improved. Moreover, in embodiments of the present disclosure, the OCR module may achieve a recognition rate as fast as the stitching through a model lightweight and a system-level performance adjustment.

Through embodiments of the present disclosure, the real-time benefit may be obtained since the image stitching and the text recognition may be performed in parallel. Moreover, since the overlapping region exists between the former and latter frames of stitched images, it is possible to remedy the incomplete or broken text at the edge of each stitched image, that is, the incomplete or broken text at the edge of the stitched image may be recognized through the text content in the overlapping region, so that the text recognition effect may be improved.

As an optional embodiment, performing a de-duplication on the plurality of recognition results based on the overlapping region between each two successive frames of stitched images in a plurality of successive frames of stitched images may include, for each two successive frames of stitched images, performing operations of: traversing each single word in a former frame of stitched image and each single word in a latter frame of stitched image, and labeling an overlapping word attribute of each single word in the two successive frames of stitched images; and performing the de-duplication on two recognition results obtained from the two successive frames of stitched images, based on the labeled overlapping word attribute of each single word in the two successive frames of stitched images.

Exemplarily, as shown in FIG. 4, the upper and lower images on the left side are successive frames of stitched images, the upper frame is a former image frame, and the lower frame is a latter image frame. Various single words in the two image frames are traversed respectively, and a Chinese character " 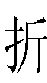 " (folds) at a tail of the former image frame and a Chinese character " 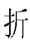 " (folds) at a head of the latter image frame may be labeled with corresponding overlapping word attributes. After a de-duplication and a concatenation based on the above-mentioned labeled overlapping word attribute, a string " 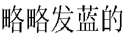 , 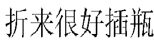 " (slightly blue, folds well for vase) may be output according to the string " 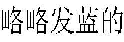 , 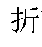 " (slightly blue, folds) recognized from the former image frame and the string " 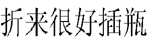 " (folds well for vase) recognized from the latter image frame. This string is a final accurate recognition result.

In an embodiment of the present disclosure, when performing a full image string combination output, an empty string str may be set, and then each single word wordi in the former frame of stitched image may be traversed. In a case that a current single word does not have the overlapping word attribute, str+=wordi is assigned. In a case that the current single word has the overlapping word attribute, a confidence of the current single word in the former frame of stitched image and a confidence of the current single word in the latter frame of stitched image are determined, then a character having a higher confidence is selected, and str+=wordi is assigned. After a traversal of the former frame of stitched image, str+=wordi is accumulated from a single word without the overlapping word attribute in the latter stitched image frame, and finally a string in which the overlapping regions are removed may be obtained.

Exemplarily, if a string " 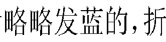 " (slightly blue, folds) is recognized from the former frame of stitched image, and a string " 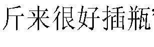 " (olds well for vase) is recognized from the latter frame of stitched image, where the Chinese character " 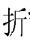 " in the string " 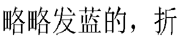 " has a confidence of 0.7, and the Chinese character " 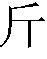 " in the string " 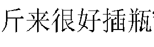 " has a confidence of 0.2, then the Chinese character " 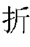 " rather than the Chinese character " 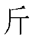 " is selected when the de-duplication is performed based on the overlapping region corresponding to " 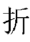 " and " 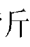 ".

Through embodiments of the present disclosure, any two successive frames of stitched images may be labeled with the overlapping word attribute, and the de-duplication may be performed based on the labeled overlapping words, so as to achieve a purpose of efficiently and accurately extracting the text information.

Moreover, in embodiments of the present disclosure, a text recognition content of each frame may be returned to an upstream module in real time, so as to achieve a real-time return of a full image recognition content, which may be used to improve a user experience in an application scene such as translation, retrieval, recommendation, and screen display. In other words, in embodiments of the present disclosure, the image stitching and the OCR may be performed in parallel, and the recognition result of each frame of stitched image may be returned in real time, so that a complete string for the currently scanned location may be output, and a real-time product performance may be ensured.

In addition, in embodiments of the present disclosure, in order to reduce the time consumption caused by the full image recognition, the OCR recognition results of all the previous stitched segments may be cached. After the overlapping region content in the recognition results of each two stitched image frames is de-duplicated, the de-duplicated strings may be concatenated to obtain the full image recognition content, so that a performance loss of the full image recognition may be effectively reduced.

Through embodiments of the present disclosure, an accuracy of the text recognition may be improved.

Further, as an optional embodiment, performing a de-duplication on two recognition results obtained from two image frames based on the labeled overlapping word attribute of each single word in the two image frames may include: for two single words with the same overlapping word attribute in two image frames, retaining a recognition result of a single word having a higher confidence in the two single words in the process of performing the de-duplication on the two recognition results.

In an embodiment of the present disclosure, when performing a full image string combination output, an empty string str may be set, and then each single word wordi in the former frame of stitched image may be traversed. In a case that a current single word does not have the overlapping word attribute, str+=wordi is assigned. In a case that the current single word has the overlapping word attribute, a confidence of the current single word in the former frame of stitched image and a confidence of the current single word in the latter frame of stitched image are determined, then a character having a higher confidence is selected, and str+=wordi is assigned. After a traversal of the former frame of stitched image, str+=wordi is accumulated from a single word without the overlapping word attribute in the latter stitched image frame, and finally a string in which the overlapping regions are removed may be obtained.

Exemplarily, if a string " 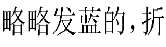 " (slightly blue, folds) is recognized from the former frame of stitched image, and a string " 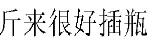 " (olds well for vase) is recognized from the latter frame of stitched image, where the Chinese character " 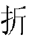 " in the string " 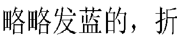 " has a confidence of 0.7, and the Chinese character " 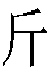 " in the string " 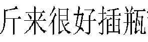 " has a confidence of 0.2, then the Chinese character " 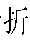 " rather than the Chinese character " 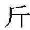 " is selected when the de-duplication is performed based on the overlapping region corresponding to " 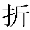 " and " 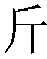 ".

Through embodiments of the present disclosure, the accuracy of the text recognition may be improved.

In addition, in embodiments of the present disclosure, an appropriate overlapping region is retained between the former and latter frames of stitched images, which may effectively mitigate a problem that some broken or incomplete words at the edge of the image may not be recognized, so that the accuracy of the text recognition may be ensured.

As an optional embodiment, traversing each single word in the former frame of stitched image and each single word in the latter frame of stitched image and labeling the overlapping word attribute of each single word in the two image frames may include operations of: traversing each single word in the former frame of stitched image from a tail of the former frame to a head of the former frame, and traversing each single word in the latter frame of stitched image from a head of the latter frame to a tail of the latter frame, so as to label the overlapping word attribute of each single word in the two image frames; and terminating the current traversal in response to traversing to a first single word without the overlapping word attribute in the former frame of stitched image.

It should be understood that for any two adjacent frames of stitched images, an overlapping region may exist between the tail part of the former frame of stitched image and the head part of the latter frame of stitched image, and the other parts of the two image frames may not have an overlapping region. In other words, for any two adjacent frames of stitched images, the overlapping region is necessarily located in a rear section of the former image frame and a front section of the latter image frame.

Therefore, by using the traversal method of embodiments of the present disclosure, that is, by traversing each single word in the former frame of stitched image from the tail to the head and traversing each single word in the latter frame of stitched image from the head to the tail so as to label the overlapping word attribute of each single word in the two image frames; and terminating the current traversal in response to traversing to a first single word without the overlapping word attribute in the former frame of stitched image, only a possible overlapping region is traversed, so that some computation may be reduced in the traversal, and the OCR performance may be improved.

As an optional embodiment, traversing each single word in the former frame of stitched image and each single word in the latter frame of stitched image and labeling the overlapping word attribute of each single word in the two image frames may include: skipping, in a current traversal, at least one single word labeled with the overlapping word attribute in the former frame of stitched image, and continuing to traverse other words not labeled with the overlapping word attribute.

In embodiments of the present disclosure, each single word in the former frame of stitched image may be traversed from the head to the tail, and each single word in the latter frame of stitched image may be traversed from the head to the tail. When traversing to at least one word labeled with the overlapping word attribute in the former frame of stitched image, the at least one word may be skipped in the current traversal, and other words not labeled with the overlapping word attribute may continue to be traversed.

Through embodiments of the present disclosure, a region of a current frame of stitched image that has been determined to overlap with the previous frame of stitched image may be skipped, and only a region of the current frame of stitched image that may overlap with the next frame of stitched image is traversed, so that some computation may be reduced in the traversal, and the OCR performance may be improved.

Alternatively, as an optional embodiment, traversing each single word in the former frame of stitched image and each single word in the latter frame of stitched image and labeling the overlapping word attribute of each single word in the two image frames may include operations of: traversing each single word in the former frame of stitched image to determine a location information of a target single word currently traversed; determining a predicted location information of the target single word in the latter frame of stitched image based on a homography matrix and the location information of the target single word; traversing each single word in the latter frame of stitched image to determine a true location information of the target single word in the latter stitched image frame; and labeling the target single word in the former frame of stitched image and the target single word in the latter frame of stitched image respectively with corresponding overlapping word attributes, in response to a region represented by the predicted location information and a region represented by the true location information being overlapping regions.

It should be understood that the predicted location information of the target single word in the next frame of stitched image may be obtained by multiplying the location information of the target single word in the current frame of stitched image by the corresponding homography matrix.

Further, IoU (Intersection over Union) may be calculated for the region represented by the predicted location information and the region represented by the true location information. It should be understood that the IoU is actually a ratio of an intersection to a union of a "predicted single word border" and a "true single word border". When the IoU is higher than a preset threshold, it is considered that the region represented by the predicted location information and the region represented by the true location information are overlapping regions, and the single words in the regions in the former and latter image frames may be labeled with corresponding overlapping word attributes. According to the above operation, the overlapping word attribute of each single word may be obtained after the traversal is completed.

In embodiments of the present disclosure, the OCR module may decode each frame of stitched image by using a CTC (Connectionist Temporal Classification) algorithm. The CTC algorithm is used to classify temporal data.

It should be understood that through the above-mentioned OCR module, a predicted probability matrix M for each character in a text line at each moment may be obtained. Based on the matrix M, N (representing how many moments are output according to the text line) may be obtained, and Ni (representing how many moments are occupied by each character in the matrix) may be obtained through decoding and filtering. A width w of each moment may be approximately obtained according to a network structure. Based on the above information, a location of a single word may be deduced. An upper left point of each character is a product of a number of a starting moment and the width w of each moment, which refers to a product approximation of a total number of moments Ni occupied by the character and the width w of each moment. Finally, a coordinate point may be adjusted for different character attributes, such as Chinese, English, numbers, punctuation, etc. Such adjustment generally refers to an adjustment of the upper left point and the width based on some empirical thresholds. A location of a single word may be indicated by a four-point box. For example, after the upper left point and the width are determined, a four-point bounding box for the single word may be represented clockwise. Besides, the predicted character output and the corresponding confidence of the single word may be obtained by mapping with a character encoding table for each time. So far, the location of each single word, the content of the single word and the confidence of the single word in each frame of stitched image may be obtained through the OCR.

Through embodiments of the present disclosure, based on the location of the single word and the homography matrix, it may be determined whether an overlapping region exists between adjacent two frames of stitched images, and then the overlapping word attribute of each single word may be determined, so as to facilitate the subsequent de-duplication.

It should be noted that in embodiments of the present disclosure, only simple operations on coordinate variables and strings are involved, so that the memory consumption is low.

In addition, in embodiments of the present disclosure, an input of the de-duplication module includes a recognition prediction result obtained after each frame of stitched image is recognized by the OCR module, and the homography matrix H representing a mapping relationship between the current frame of stitched image and the previous frame of stitched image (the matrix is output by the image stitching module). The above-mentioned recognition prediction result includes a text line location and a text decoding information output. In this solution, the de-duplication module may be used to perform three steps, including a single word information extraction, a de-duplication based on the location of the single word and the homography matrix, and a full image string combination output.

In addition, embodiments of the present disclosure may be implemented to, in a recognition scene where a high-speed camera captures a large number of text fragments, quickly remove an overlapping text information in several text fragments, and perform a real-time effective text extraction, so as to meet a real-time screen display requirement for the smart hardware product.

According to embodiments of the present disclosure, the present disclosure further provides an apparatus of recognizing a text.

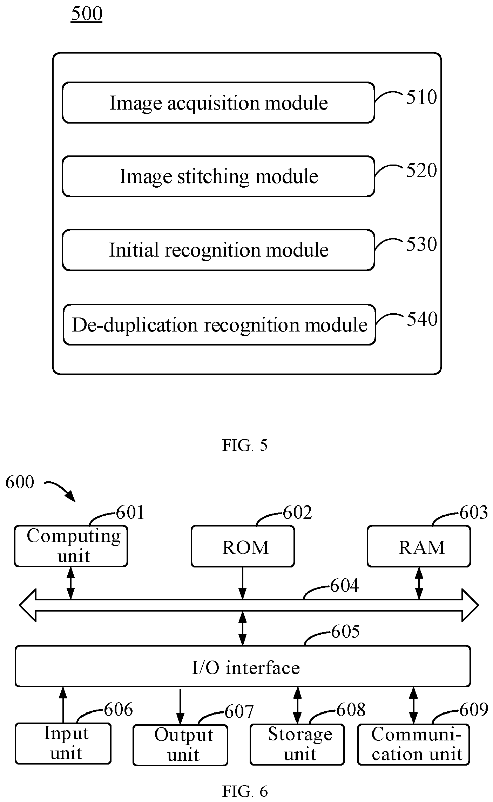

FIG. 5 exemplarily shows a block diagram of an apparatus of recognizing a text according to embodiments of the present disclosure.

As shown in FIG. 5, an apparatus 500 of recognizing a text may include: an image acquisition module 510 used to acquire a plurality of image sequences obtained by continuously scanning a document; an image stitching module 520 used to perform an image stitching based on the plurality of image sequences, so as to obtain a plurality of successive frames of stitched images corresponding to the plurality of image sequences respectively, where an overlapping region exists between each two successive frames of stitched images; an initial recognition module 530 used to perform a text recognition based on the plurality of successive frames of stitched images, so as to obtain a plurality of corresponding recognition results; and a de-duplication recognition module 540 used to perform a de-duplication on the plurality of recognition results based on the overlapping region between each two successive frames of stitched images in the plurality of successive frames of stitched images, so as to obtain a text recognition result for the document.

As an optional embodiment, the de-duplication recognition module may include: an attribute labeling unit used to, for two successive frames of stitched images, traverse each single word in a former frame of stitched image and each single word in a latter frame of stitched image, and label an overlapping word attribute of each single word in the two successive frames of stitched images; and a de-duplication unit used to perform the de-duplication on two recognition results obtained from the two successive frames of stitched images, based on the labeled overlapping word attribute of each single word in the two successive frames of stitched images.

As an optional embodiment, the de-duplication unit is further used to: retain, for two single words with the same overlapping word attribute in the two successive frames of stitched images, the recognition result of a single word having a higher confidence in the two single words in a process of performing the de-duplication on the two recognition results.

As an optional embodiment, the attribute labeling unit is further used to: traverse each single word in the former frame of stitched image from a tail of the former frame to a head of the former frame, and traverse each single word in the latter frame of stitched image from a head of the latter frame to a tail of the latter frame, so as to label the overlapping word attribute of each single word in the two successive frames of stitched images; and terminate the current traversal in response to traversing to a first single word without the overlapping word attribute in the former frame of stitched image.

As an optional embodiment, the attribute labeling unit is further used to: skip, in a current traversal, at least one single word labeled with the overlapping word attribute in the former frame of stitched image, and continue to traverse other single words not labeled with the overlapping word attribute.

As an optional embodiment, the attribute labeling unit is further used to: traverse each single word in the former frame of stitched image to determine a location information of a target single word currently traversed; determine a predicted location information of the target single word in the latter frame of stitched image based on a homography matrix and the location information of the target single word; traverse each single word in the latter frame of stitched image to determine a true location information of the target single word in the latter stitched image frame; and label the target single word in the former frame of stitched image and the target single word in the latter frame of stitched image respectively with corresponding overlapping word attributes, in response to a region represented by the predicted location information and a region represented by the true location information being overlapping regions.

It should be understood that embodiments of the apparatus part of the present disclosure are correspondingly identical or similar to embodiments of the method part of the present disclosure, and the technical problems solved and the technical effects achieved are correspondingly identical or similar to each other, which will not be repeated here.

According to embodiments of the present disclosure, the present disclosure further provides a smart dictionary pen. The smart dictionary pen includes the apparatus of recognizing the text in any of the above-described embodiments, and details are not described here.

Embodiments of the present disclosure provide an efficient dynamic text de-duplication solution for a scene of recognizing text fragments of successive video frames. The present disclosure may be applied to a smart hardware product or a mobile terminal product, and may provide a corresponding solution for the real-time performance of text scanning and recognition. Moreover, the present disclosure may contribute a technical route to a smart hardware product layout of company, and provide a possibility for an ecological layout of company.

According to embodiments of the present disclosure, the present disclosure further provides an electronic device, a readable storage medium, and a computer program product.

FIG. 6 shows a schematic block diagram of an exemplary electronic device 600 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the device 600 may also be stored. The computing unit 601, the ROM 602, and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or a dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and processing described above, such as the method of recognizing a text. For example, in some embodiments, the method of recognizing a text may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of recognizing a text. Alternatively, in other embodiments, the computing unit 601 may be configured to execute the method of recognizing a text by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local region network (LAN), a wide region network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or a cloud host, which is a host product in a cloud computing service system to solve shortcomings of difficult management and weak business scalability existing in a traditional physical host and VPS (Virtual Private Server) service. The server may also be a server of a distributed system or a server combined with a block-chain.

In the technical solution of the present disclosure, a collection, storage, use, processing, transmission, provision, disclosure, and application of image data involved comply with provisions of relevant laws and regulations, take essential confidentiality measures, and do not violate public order and good custom.

In the technical solution of the present disclosure, authorization or consent is obtained from the user before the user's personal information is obtained or collected.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-described specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of recognizing a text, comprising:
acquiring (S210) a plurality of image sequences (31, 32, 33) obtained by continuously scanning a document (30);
performing (S220) an image stitching based on the plurality of image sequences (31, 32, 33), so as to obtain a plurality of successive frames of stitched images (310, 320, 330) corresponding to the plurality of image sequences (31, 32, 33) respectively, wherein an overlapping region exists between each two successive frames of stitched images (310, 320, 330);
performing (S230) a text recognition based on the plurality of successive frames of stitched images (310, 320, 330), so as to obtain a plurality of corresponding recognition results; and
performing (S240) a de-duplication on the plurality of recognition results based on the overlapping region between each two successive frames of stitched images (310, 320, 330) in the plurality of successive frames of stitched images (310, 320, 330), so as to obtain a text recognition result for the document (30).

2. The method (200) according to claim 1, wherein the performing (S240) a de-duplication on the plurality of recognition results based on the overlapping region between each two successive frames of stitched images (310, 320, 330) in the plurality of successive frames of stitched images (310, 320, 330) comprises: for each two successive frames of stitched images (310, 320, 330),
traversing each single word in a former frame of stitched image and each single word in a latter frame of stitched image, and labeling an overlapping word attribute of each single word in the two successive frames of stitched images; and
performing the de-duplication on two recognition results obtained from the two successive frames of stitched images, based on the labeled overlapping word attribute of each single word in the two successive frames of stitched images.

3. The method (200) according to claim 2, wherein the performing the de-duplication on two recognition results obtained from the two successive frames of stitched images, based on the labeled overlapping word attribute of each single word in the two successive frames of stitched images comprises:
retaining, for two single words with the same overlapping word attribute in the two successive frames of stitched images, the recognition result of a single word having a higher confidence in the two single words in a process of performing the de-duplication on the two recognition results.

4. The method (200) according to claim 2 or 3, wherein the traversing each single word in a former frame of stitched image and each single word in a latter frame of stitched image, and labeling an overlapping word attribute of each single word in the two successive frames of stitched images comprises:
traversing each single word in the former frame of stitched image from a tail of the former frame to a head of the former frame, and traversing each single word in the latter frame of stitched image from a head of the latter frame to a tail of the latter frame, so as to label the overlapping word attribute of each single word in the two successive frames of stitched images; and
terminating the current traversal in response to traversing to a first single word without the overlapping word attribute in the former frame of stitched image.

5. The method (200) according to claim 2 or 3, wherein the traversing each single word in a former frame of stitched image and each single word in a latter frame of stitched image, and labeling an overlapping word attribute of each single word in the two successive frames of stitched images comprises:
skipping, in a current traversal, at least one single word labeled with the overlapping word attribute in the former frame of stitched image, and continuing to traverse other single words not labeled with the overlapping word attribute.

6. The method (200) according to claim 2, wherein the traversing each single word in a former frame of stitched image and each single word in a latter frame of stitched image, and labeling an overlapping word attribute of each single word in the two successive frames of stitched images comprises:
traversing each single word in the former frame of stitched image to determine a location information of a target single word currently traversed;
determining a predicted location information of the target single word in the latter frame of stitched image based on a homography matrix and the location information of the target single word;
traversing each single word in the latter frame of stitched image to determine a true location information of the target single word in the latter stitched image frame; and
labeling the target single word in the former frame of stitched image and the target single word in the latter frame of stitched image respectively with corresponding overlapping word attributes, in response to a region represented by the predicted location information and a region represented by the true location information being overlapping regions.

7. An apparatus (500) of recognizing a text, comprising:
an image acquisition module (101, 510) configured to acquire a plurality of image sequences obtained by continuously scanning a document;
an image stitching module (102, 520) configured to perform an image stitching based on the plurality of image sequences, so as to obtain a plurality of successive frames of stitched images corresponding to the plurality of image sequences respectively, wherein an overlapping region exists between each two successive frames of stitched images;
an initial recognition module (103, 530) configured to perform a text recognition based on the plurality of successive frames of stitched images, so as to obtain a plurality of corresponding recognition results; and
a de-duplication recognition module (104, 540) configured to perform a de-duplication on the plurality of recognition results based on the overlapping region between each two successive frames of stitched images in the plurality of successive frames of stitched images, so as to obtain a text recognition result for the document.

8. The apparatus (500) according to claim 7, wherein the de-duplication recognition module (104, 504) comprises:
an attribute labeling unit configured to, for two successive frames of stitched images, traverse each single word in a former frame of stitched image and each single word in a latter frame of stitched image, and label an overlapping word attribute of each single word in the two successive frames of stitched images; and
a de-duplication unit configured to perform the de-duplication on two recognition results obtained from the two successive frames of stitched images, based on the labeled overlapping word attribute of each single word in the two successive frames of stitched images,
wherein the de-duplication unit is further configured to:
retain, for two single words with the same overlapping word attribute in the two successive frames of stitched images, the recognition result of a single word having a higher confidence in the two single words in a process of performing the de-duplication on the two recognition results.

9. The apparatus (500) according to claim 8, wherein the attribute labeling unit is further configured to:
traverse each single word in the former frame of stitched image from a tail of the former frame to a head of the former frame, and traverse each single word in the latter frame of stitched image from a head of the latter frame to a tail of the latter frame, so as to label the overlapping word attribute of each single word in the two successive frames of stitched images; and
terminate the current traversal in response to traversing to a first single word without the overlapping word attribute in the former frame of stitched image.

10. The apparatus (500) according to claim 8, wherein the attribute labeling unit is further configured to:
skip, in a current traversal, at least one single word labeled with the overlapping word attribute in the former frame of stitched image, and continue to traverse other single words not labeled with the overlapping word attribute.

11. The apparatus (500) according to claim 8, wherein the attribute labeling unit is further configured to:
traverse each single word in the former frame of stitched image to determine a location information of a target single word currently traversed;
determine a predicted location information of the target single word in the latter frame of stitched image based on a homography matrix and the location information of the target single word;
traverse each single word in the latter frame of stitched image to determine a true location information of the target single word in the latter stitched image frame; and
label the target single word in the former frame of stitched image and the target single word in the latter frame of stitched image respectively with corresponding overlapping word attributes, in response to a region represented by the predicted location information and a region represented by the true location information being overlapping regions.

12. An electronic device (600), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 6.

13. A non-transitory computer-readable storage medium having computer instructions therein, wherein the computer instructions are configured to cause a computer to implement the method according to any one of claims 1 to 6.

14. A computer program product containing a computer program, wherein the computer program, when executed by a processor, causes the processor to implement the method according to any one of claims 1 to 6.

15. A smart dictionary pen comprising the apparatus according to any one of claims 7 to 11.
